# EUROPÄISCHE PATENTSCHRIFT

(11) **EP 2 604 341 B1**
(45) Veröffentlichungstag und Bekanntmachung des Hinweises auf die Patenterteilung: **04.03.2015**
(21) Anmeldenummer: 12197205.3
(22) Anmeldetag: 14.12.2012
(51) Int. Cl.: B01J 35/04, F01N 3/28

(54) **Matrix und Verfahren zu ihrer Herstellung**
Matrix and method for its production
Matrice et son procédé de fabrication

(30) Priorität: 14.12.2011 DE 102011121061
(43) Veröffentlichungstag der Anmeldung: 19.06.2013
(73) Patentinhaber: Oberland Mangold GmbH, 82438 Eschenlohe (DE)
(72) Erfinder: Mangold, Christian, 82467 Garmisch-Partenkirchen (DE); Knab, Christian, 82467 Garmisch-Partenkirchen (DE); Mangold, Matthias, 82438 Eschenlohe (DE)
(74) Vertreter: Alber, Norbert

(56) Entgegenhaltungen:
- GB-A- 2 040 179
- US-A- 5 658 536
- US-A1- 2005 274 012

## Beschreibung

### I. Anwendungsgebiet

Die Erfindung betrifft eine von einem Fluid durchströmbare Matrix mit vielen nebeneinander liegenden, frei durchströmbaren Kanälen, insbesondere als Tragkörper für Katalysatoren oder Partikelabscheider, wie im Abgasstrang eines Verbrennungsmotors, insbesondere eines Kraftfahrzeug-Verbrennungsmotors, aber auch bei anderen Anwendungen, z. B. als statischer Mischer.

### II. Technischer Hintergrund

Eine derartige Matrix, die bei Betrachtung in Verlaufsrichtung der Kanäle wie ein Wabenkörper aussieht, muss dem durchströmenden Abgas einerseits eine hohe Oberfläche als Reaktionsfläche bieten, andererseits kann es je nach Anwendungsfall von Vorteil sein, durch eine Umlenkung und Verwirbelung der Strömung in der Matrix den Kontakt zwischen Fluid und Matrixoberfläche zu verbessern.

Deshalb besteht eine solche Matrix in der Regel aus strukturierten, sehr dünnen, also mit einer Dicke von meistens unter 100 µm, Blechfolien aus in der Regel Edelstahl, die lagenweise übereinander liegen, gegebenenfalls mit einer Zwischenlage aus einer ebenen, analog dünnen Zwischenlage aus einer glatten Blechfolie.

Eine Vielzahl von Lagen, die auch Bestandteil nur einer einzigen, gewickelten Folie sein können, füllt dabei das Innere eines umgebenden Gehäuses, z. B. eines Rohrstückes aus, welches die notwendige Stabilität bietet und die Verbindung mit den angrenzenden Teilen des Abgasstranges ermöglicht.

Bei einer derartigen Matrix herrscht generell ein Zielkonflikt, indem einerseits der durch die Matrix im Abgasstrom erzeugte Druckabfall möglichst gering sein soll, andererseits das bereits nach wenigen Millimetern in der Kanalströmung vorliegende Auftreten laminarer Strömungen zu einem eingeschränkten Stofftransport quer zur Hauptströmung führt.

Bei einer Matrix mit in Strömungsrichtung verlaufenden, langen Kanälen werden zu diesem Zweck in den Kanälen Unregelmäßigkeiten wie Durchbrüche, Vorsprünge oder Ähnliches eingebaut, die eine Verwirbelung erzeugen sollen, ohne den Druckabfall allzu stark zu erhöhen, wie beispielsweise in der DE 103 04814 B3 oder US2005274012 beschrieben.

Weiterhin ist es aus der DE 29 02 779 A1 (entspricht GB 2040179), die den nächstreichenden Stand der Technik bildet, bereits bekannt, eine Matrix aus einer gewellten und einer glatten Metallfolie zu wickeln, wobei die glatte Metallfolie in axialer Richtung nur abschnittweise vorhanden ist. Entweder die glatte oder die gewellte Folie oder beide können zusätzlich Durchbrüche aufweisen, die sich jedoch immer in dem axialen Bereich befinden, in dem sowohl die glatte als auch die gewellte Metallfolie vorhanden ist.

### III. Darstellung der Erfindung

### a) Technische Aufgabe

Es ist daher die Aufgabe gemäß der Erfindung, eine Matrix mit möglichst geringem Gewicht sowie ein Verfahren zu ihrer Herstellung zur Verfügung zu stellen, welche trotz einfacher und kostengünstiger Herstellung einerseits eine ausreichende Verwirbelung auch in Querrichtung zur Hauptströmungsrichtung bietet und dennoch der dadurch bewirkte Druckverlust möglichst gering bleibt bei der zumindest der Anfangsbereich der Matrix in Anströmungsrichtung möglichst schnell auf eine funktionsfähige Temperatur kommt.

### b) Lösung der Aufgabe

Diese Aufgabe wird durch die Merkmale der Ansprüche 1 und 16 gelöst. Vorteilhafte Ausführungsformen ergeben sich aus den Unteransprüchen.

Zunächst soll für die Zwecke der vorliegenden Anmeldung festgelegt werden, dass unter einer strukturierten Metallfolie eine solche Metallfolie zu verstehen ist, deren Strukturierung sich im Wesentlichen über die gesamte Fläche der Metallfolie erstreckt und die Struktur in Querrichtung zur Hauptebene der Metallfolie eine Höhe von mindestens 0,5 mm, besser 1,0 mm besitzt, jedenfalls mehr als das 10fache, besser mehr als das 20fache der Dicke der strukturierten Metallfolie.

Unter einer glatten Metallfolie wird jede Metallfolie verstanden, die keine strukturierte Metallfolie ist, also deren eventuell vorhandene Struktur eine geringere Höhe als gemäß der Definition für eine strukturierte Metallfolie ist oder deren Strukturierung sich nicht über die gesamte Fläche der Folie erstreckt.

Die bestehende Aufgabe wird dadurch gelöst, dass bei abwechselnd übereinander liegenden glatten und strukturierten Metallfolien eine der beiden Metallfolien im axialen Verlauf nur abschnittsweise vorhanden ist, beispielsweise indem diese nur abschnittsweise Metallfolie nur in quer zur Längsrichtung liegenden Streifen vorhanden ist, die zueinander beabstandet sind, oder aus einer durchgehenden Folie streifenförmige Durchbrüche mit Verlaufsrichtung quer zur Hauptströmungsrichtung aufweisen.

Bereits diese nur abschnittsweise vorhandene Metallfolie bewirkt, dass in den Lücken dazwischen ein Gasaustausch zwischen benachbarten, insbesondere radial benachbarten, Kanälen stattfinden kann, da diese in dem Bereich der Lücke nicht mehr voneinander getrennt sind.

Ferner wird durch die Lücken die Wärmeleitung in der nur abschnittweise vorhandenen Metallfolie in axialer Richtung unterbrochen, sodass durch diese axiale thermische Entkopplung zu Beginn der Durchströmung der Matrix mit heißen Abgasen der auf der Anströmseite liegende Anfangsbereich der Matrix schneller die notwendige Betriebstemperatur erreicht, da die Wärmeableitung in axialer Richtung verringert ist.

Indem des Weiteren in der anderen Metallfolie Durchschneidungen vorhanden sind, deren gegeneinander gerichtete Schnittflächen in Querrichtung zur Hauptebene der Folien zueinander versetzt, insbesondere gespiegelt, sind, sodass sich zumindest eine dieser Schnittflächen innerhalb des bis dahin freien Querschnitts des jeweiligen Kanals befindet, wird hierdurch durch die entstehenden Überdruck- und Unterdruckverhältnisse die Umleitung von Teilen der Gasströmung von einem Kanal in einen benachbarten Kanal zusätzlich gefördert.

Indem diese Durchschneidungen vorzugsweise in den Abschnitten liegen, in denen die abschnittsweise Metallfolie nicht vorhanden ist, wird dadurch der durch die zueinander versetzten Schnittflächen entstehende Staudruck sehr gering bleiben.

Bei einer bevorzugten Ausführungsform ist die nur abschnittsweise vorhandene Metallfolie die glatte Metallfolie, während die strukturierte Metallfolie vorzugsweise durchgehend vorhanden ist.

Die Durchschneidungen, die vorzugsweise in der anderen, insbesondere durchgehenden, Folie vorhanden sind, sind insbesondere Bestandteil einer Sekundärstruktur, beispielsweise von Umstülpungen, wie sie in einer wellenförmigen Primärstruktur der strukturierten Folie vorhanden sein können, die in axialer Richtung der strukturierten Folie verlaufen, z.B. indem die Wellenberge und/oder die Wellenflanken von oben und/oder von der Seite der Wellenberge her eingedrückt und insbesondere nach Innen gestülpt sind.

Die Durchschneidungen befinden sich dann vorzugsweise an mindestens dem einen Ende, vorzugsweise dem vorderen, also angeströmten, Ende der Umstülpung, oder auch an beiden Enden der Umstülpungen.

Die Durchschneidungen sind dabei quer zur Axialrichtung liegende Schnitte, bei denen sich die gegenüber liegenden Schneidkanten axial dicht gegenüber liegend befinden, sodass vorzugsweise keine Ausstanzungen zwischen den Schneidkanten vorhanden sind. Bevorzugt befinden sich die Umstülpungen mindestens teilweise, am besten sogar vollständig, in den Lücken zwischen der nur abschnittsweise vorhandenen Metallfolie in der durchgehenden Metallfolie.

Beispielsweise kann die abschnittsweise Metallfolie in Form von einzelnen beabstandeten Streifen aus Folie bestehen, die quer zur Axialrichtung der Matrix verlaufend zwischen den durchgehenden Folien vorhanden sind, wobei die Streifen vorzugsweise aus glatter Metallfolie bestehen und die durchgehende Metallfolie bevorzugt die strukturierte, beispielsweise gewellte, Folie ist.

In einer bevorzugten Ausführungsform besteht die Matrix aus je einer glatten und je einer strukturierten Metallfolie, die spiralig aufgewickelt sind zu einem Matrixkörper. Wenn die abschnittweise Metallfolie dabei in Form von Streifen vorliegt, sind vorzugsweise die spiralinneren Enden dieser Streifen an der anderen, durchgehenden Metallfolie befestigt, beispielsweise verschweißt oder verlötet, um diese beim anschließenden Wickelprozess ihre Position beibehalten zu lassen.

Dennoch ist beim Wickelvorgang in der Regel eine seitliche Führung der Streifen unmittelbar vor dem wickeln sinnvoll.

Die Sekundärstruktur, insbesondere die Umstülpungen, kann entweder immer von der gleichen Seite her in die Metallfolie eingebracht sein oder in axialer Richtung abwechselnd von den beiden Seiten her eingebracht sein.

Dabei kann es sich empfehlen, die nur abschnittsweise Metallfolie dicker zu wählen als die andere, insbesondere durchgehende, Metallfolie, und zwar vorzugsweise um 20 % bis 60 % dicker.

Die Umstülpungen von oben weisen bevorzugt eine Höhe von 30 bis 100 %, insbesondere von 50 % bis 80 %, der Höhe der gewellten Metallfolie auf, die Umstülpungen von der Seite von 5 % bis 60 % dieser Zellhöhe.

Bei einer abschnittsweisen Metallfolie in Form von einzelnen Streifen beträgt die Breite der Streifen zwischen dem 0,1-fachen und 2,0-fachen, besser zwischen dem 0,3-fachen und 1,6-fachen, der Abstände zwischen den Streifen und/oder zwischen dem 2-fachen und 60-fachen, insbesondere zwischen dem 4-fachen und dem 20-fachen, der Höhe der strukturierten Metallfolie in der fertigen Matrix, insbesondere in den äußeren Bereichen der Matrix.

In absoluten Zahlen kann die Dicke der strukturierten Metallfolie zwischen 30 und 110 µm betragen, insbesondere zwischen 40 und 100 µm, insbesondere zwischen 50 und 80 µm.

Bei einer mit 400 m³/h Gas durchströmten, spiralig gewickelten Matrix mit folgenden Parametern
- gewellte Metallfolie als durchgehende Lage mit einer Zellhöhe (Wellenhöhe) von 1,3 mm und einer Foliendicke von 50 µm.
- glatte Metallfolie in axialer Richtung durchgehend vorhanden und einer Foliendicke von 50 µm,
- axiale Länge der Matrix 101,5 mm,
- Durchmesser der Matrix 70 mm,
- 300 Zellen pro inch²,
konnte eine Reduzierung des Druckabfalls um 16% erreicht werden, in dem diese Matrix wie folgt verändert wurde:
- glatte Metallfolie in axialer Richtung nur abschnittweise vorhanden in Form von spiralig umlaufenden Streifen,
- 4 Streifen von je 15 mm Breite über die Länge der Matrix gleichmäßig verteilt, der erste und letzte Streifen befinden sich jeweils am Anfang und Ende der Matrix,
- in alle Wellenberge wurden axial abschnittweise 3 Umstülpungen von je 10 mm Länge eingebracht, davon 2 von oben und eine von unten,
- die nicht umgestülpten Bereiche, davon je einer am Anfang und am Ende der Matrix, sind je 17,8 mm lang,
- die Umstülpungen sind 1,05 mm hoch, also ca. 80 % der Zellhöhe.

### c) Ausführungsbeispiele

Ausführungsformen gemäß der Erfindung sind im Folgenden beispielhaft näher beschrieben. Es zeigen:
- Fig. 1a:: eine geschichtete Matrix,
- Fig. 1b:: eine gewickelte Matrix und
- Fig. 2: ein Ausschnitt aus einer erfindungsgemäßen Matrix einer ersten Bauform.

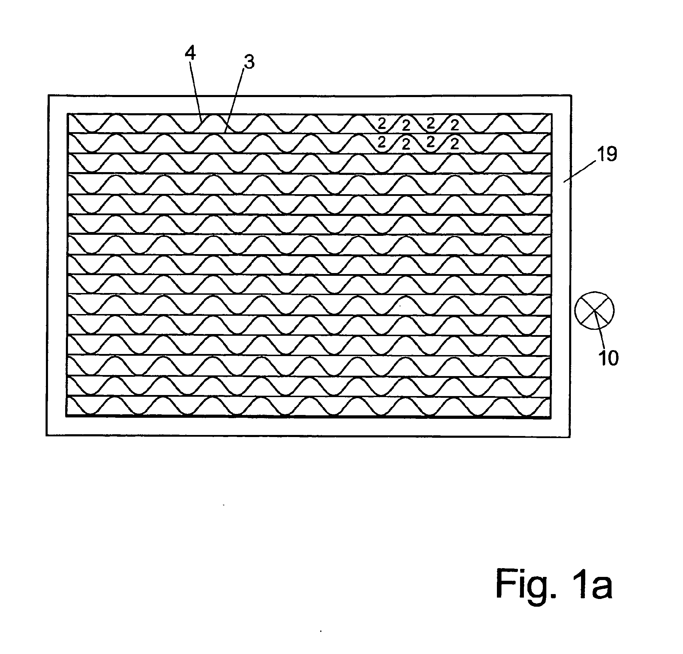

**Figur 1a** zeigt in stirnseitiger Ansicht, also betrachtet in axialer Richtung 10 der Matrix 1 und damit in Durchströmungsrichtung der Matrix eine geschichtete Matrix, bei der in mehreren horizontalen Lagen übereinander abwechselnd eine glatte Lage aus Metallfolie 3 und eine strukturierte, nämlich gewellte, Lage aus Metallfolie 4 abwechselnd übereinander gelegt sind und sich wechselseitig berühren, wodurch einzelne in axialer Richtung 10 verlaufende Kanäle 2 zwischen den Metallfolien entstehen.

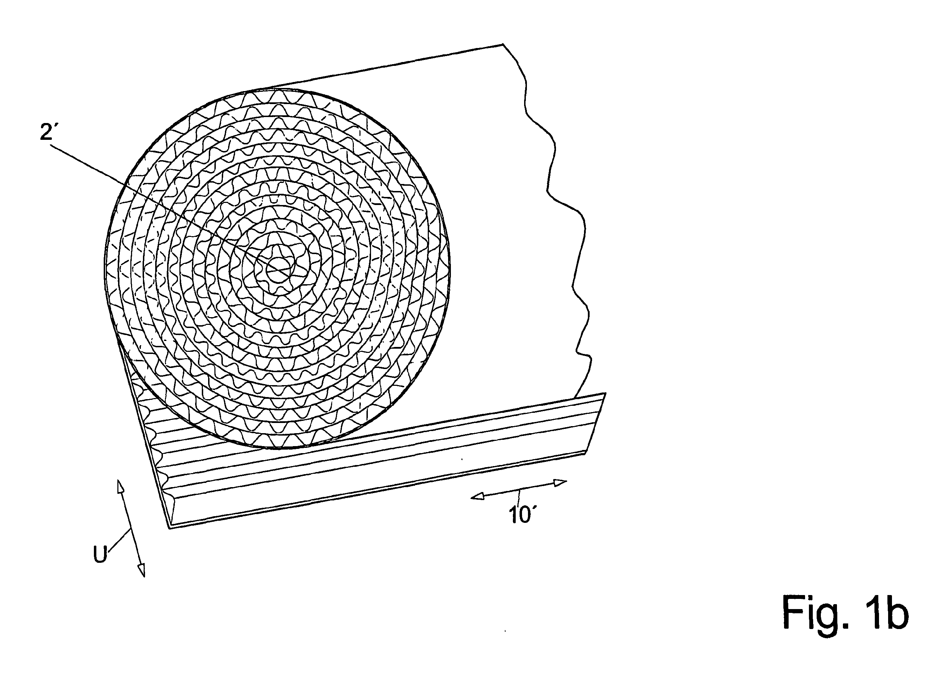

Dagegen ist die Matrix der **Figur 1b** eine spiralig aus gewellter und glatter Metallfolie gewickelte Matrix.

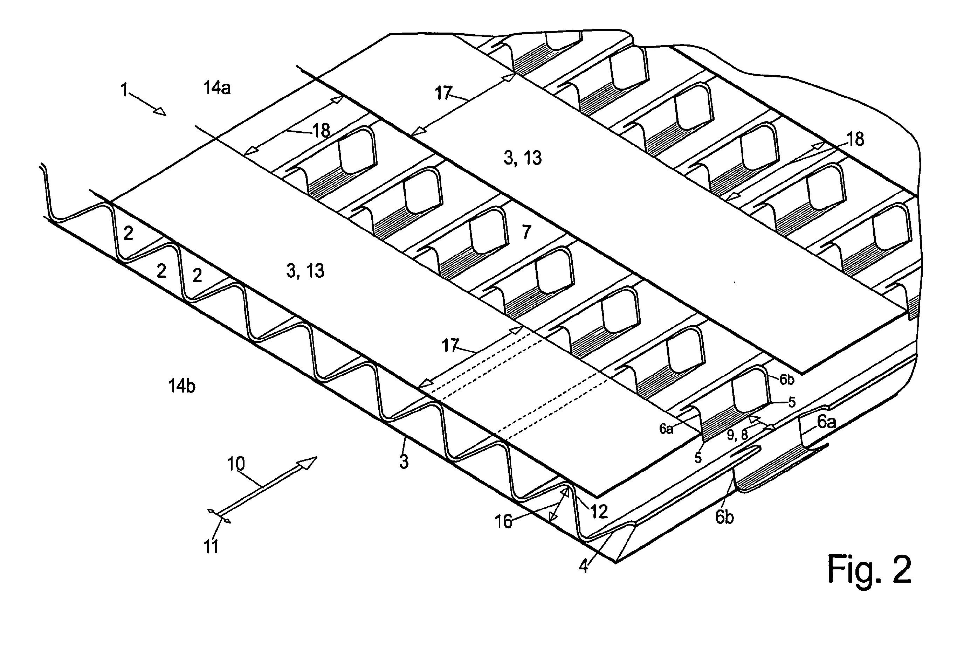

**Figur 2** zeigt einen vergrößerten Ausschnitt aus nur wenigen Lagen einer Matrix 1 - egal ob sie geschichtet ist wie in Figur 1 oder spiralig gewickelt - wobei in axialer Richtung 10 die eine, nämlich die durchgehend strukturierte, in diesem Fall gewellte, Metallfolie 4 in axialer Richtung 10 über die gesamte Länge der Matrix 1 durchgeht, während die andere Metallfolie, in diesem Fall die glatte Metallfolie 3 in axialer Richtung nur abschnittweise vorhanden ist, nämlich ihn Form von Streifen 13, die in Querrichtung 11 zur Axialrichtung 10 in der Hauptebene der Metallfolien verlaufen, also nur über die Breite 17 dieser Streifen 13 in axialer Richtung vorhanden sind, dagegen in den Abständen 18 zwischen den Streifen 13, also in den Abschnitten 7, keine glatte Metallfolie 3 vorhanden ist.

Zusätzlich weist die strukturierte, nämlich gewellte Metallfolie 4 eine dieser Wellung überlagerte Sekundärstruktur 8 auf, die aus Umstülpungen 9 besteht, welche in die Wellenberge 12 über eine definierte Länge in Axialrichtung 10 hinweg eingebracht sind, und in der der Wellenberg nach unten durchgedrückt ist. Dadurch entsteht am Anfang und Ende der Umstülpung 9 jeweils eine Durchschneidung 5 der gewellten Metallfolie 4, deren in axialer Richtung 10 sich unmittelbar und ohne Abstand gegenüberliegenden Schnittflächen 6a, b quer zur Hauptebene der gewählten Folie 4 zueinander versetzt sind, und damit bei stirnseitiger Ansicht eine Verdoppelung der Zellenanzahl.

Dadurch steht die durchgedrückte Schnittkante 6a der in Strömungsrichtung 10 strömenden Abgase im Inneren des bis dahin geschlossenen Kanals 2 entgegen und wirkt als Stromteiler in diesem Kanal, zumal die Höhe 15 der Umstülpung 9 geringer ist als die Höhe 16 der Wellung der gewellten Metallfolie 4.

Bei der Lösung gemäß Fig. 2 befindet sich die Umstülpung 9 mit ihrer gesamten axialen Erstreckung innerhalb des Abstandes 18 zwischen zwei benachbarten Streifen 13 der glatten Metallfolie 3. Dies führt zum einen dazu, dass das gegen die Schnittfläche 2 anströmende Gas nur einen geringen Druckabfall an dieser Stelle zusätzlich bewirkt, da die anströmenden Abgase problemlos nach oben bzw. unten ausweichen können, da sie daran nicht durch eine an dieser Stelle gehinderte aufliegende glatte Metallfolie 3 gehindert sind.

Auch die Durchmischung der Strömungen aus benachbarten, z. B. übereinander liegenden, Kanälen 2 wird hierdurch gefördert.

### BEZUGSZEICHENLISTE

- 1: Matrix
- 2: Kanal
- 3: glatte Metallfolie
- 4: strukturierte Metallfolie
- 5: Durchschneidung
- 6a,b: Schnittfläche
- 7: Abschnitt
- 8: Sekundärstruktur
- 9: Umstülpung
- 10: Längsrichtung, Hauptströmungsrichtung
- 11: Querrichtungsseite
- 12: Wellenberg
- 13: Streifen
- 14a,b: Seite
- 15: Höhe
- 16: Höhe
- 17: Breite
- 18: Abstand
- 19: Rohr

## Patentansprüche

1. Matrix (1) mit einer Vielzahl von frei durchströmbaren Kanälen (2) für das Abgas von Brennkraftmaschinen aus mehreren Lagen von Metallfolie, wovon
- wenigstens eine Metallfolie eine glatte Metallfolie (3) ist,
- wenigstens eine strukturierte, insbesondere durchgehend strukturierte, Metallfolie (4) eine Primärstruktur in Form von Wellen aufweist,
- die glatte Metallfolie (3) in axialer Richtung (10) nur abschnittsweise vorhanden ist, **dadurch gekennzeichnet, dass**
- die andere, strukturierte Folie (4) Durchschneidungen (5) aufweist, deren gegeneinander gerichtete Schnittflächen (6a,b) quer zur Hauptebene der Folie zueinander versetzt sind,
- die Durchschneidungen (5) in den Abschnitten (7) liegen, in denen keine abschnittsweise glatte Metallfolie vorhanden ist,
- die Durchschneidungen (5) Bestandteil einer Sekundärstruktur (8) sind, die an der durchgehenden strukturierten Folie (4) vorhanden ist,
- die Sekundärstruktur (8) Umstülpungen (9) der Wellen-Berge (12) nach innen umfasst,
- die Umstülpungen (9) in den Abschnitten (7) abseits der abschnittweisen Metallfolie (3) angeordnet sind.

2. Matrix nach Anspruch 1,
**dadurch gekennzeichnet, dass**
die Umstülpungen (9) Durchscheidungen (5) der strukturierten Metallfolie (4) mindestens an einem Ende, besser am Anfang und am Ende, aufweisen.

3. Matrix nach einem der vorhergehenden Ansprüche,
**dadurch gekennzeichnet, dass**
die gesamten Umstülpungen (9) in den Abschnitten (7) abseits der abschnittweisen Metallfolie (3) angeordnet sind.

4. Matrix nach einem der vorhergehenden Ansprüche,
**dadurch gekennzeichnet, dass**
die Matrix (1) aus spiralig aufgewickelter glatter (3) und strukturierter, insbesondere gewellter (4), Metallfolie besteht, und/oder die glatte Metallfolie (3) in Form von einem oder mehreren in axialer Richtung (10) beanstandeten Streifen (13) zwischen die Lage aus strukturierter, insbesondere gewellter Metallfolie (4) gewickelt ist.

5. Matrix nach einem der vorhergehenden Ansprüche,
**dadurch gekennzeichnet, dass**
die Streifen (13) mit ihrem spiralinneren Ende an der anderen Metallfolie befestigt, insbesondere verschweißt oder verlötet, sind

6. Matrix nach einem der vorhergehenden Ansprüche,
**dadurch gekennzeichnet, dass**
die Umstülpungen (9) immer von der gleichen Seite (14a) her in die strukturierte, insbesondere gewellte, Metallfolie (4) eingebracht sind.

7. Matrix nach einem der vorhergehenden Ansprüche,
**dadurch gekennzeichnet, dass**
die Umstülpungen (9) in axialer Richtung (10) oder in Querrichtung (11) abwechselnd von unterschiedlichen Seiten (14a, b) her in die strukturierte, insbesondere gewellte, Metallfolie (4) eingebracht sind.

8. Matrix nach einem der vorhergehenden Ansprüche,
**dadurch gekennzeichnet, dass**
die Dicke der abschnittweisen Metallfolie (3) um 5% bis 20% grösser ist als die der anderen Metallfolie (4).

9. Matrix nach einem der vorhergehenden Ansprüche,
**dadurch gekennzeichnet, dass**
die Umstülpungen (9) eine Höhe (15) von 30 % bis 100 %, insbesondere von 50 % bis 80 % der Höhe (16) der gewellten Metallfolie (4) beträgt.

10. Matrix nach einem der vorhergehenden Ansprüche,
**dadurch gekennzeichnet, dass**
die Breite (17) der Streifen (13) zwischen dem 0,3-fachen und dem 0,8-fachen, vorzugsweise zwischen dem 0,4-fachen und 0,6-fachen der Abstände (18) in axialer Richtung (10) zwischen den Streifen (13) beträgt.

11. Matrix nach einem der vorhergehenden Ansprüche,
**dadurch gekennzeichnet, dass**
die Breite (17) der Streifen (13) zwischen dem 3-fachen und 10-fachen, insbesondere zwischen dem 3-fachen und 4-fachen, der Höhe (16) der gewellten Metallfolie (4) in der fertigen Matrix (1), insbesondere in deren äußeren Bereichen, entspricht.

12. Matrix nach einem der vorhergehenden Ansprüche,
**dadurch gekennzeichnet, dass**
die Dicke der gewellten Metallfolie zwischen 30 und 70 µm, insbesondere zwischen 40 und 60 µm, insbesondere zwischen 45 und 55 µm beträgt und die Metallfolie insbesondere aus Edelstahl besteht.

13. Verfahren zum Herstellen der Matrix nach einem der Ansprüche 1 bis 12,
**dadurch gekennzeichnet, dass**
die Streifen (13) beim Wickeln der Matrix (1) seitlich geführt werden.

## Claims

1. A matrix (1) with a plurality of freely flow able channels (2) for an exhaust gas of internal combustion engines, the matrix comprising plural layers of a metal foil,
- wherein at least one metal foil is a smooth metal foil (3),
- wherein at least one structured, in particular continuously structured metal foil (4) includes a primary structure in a form of waves,
- wherein the smooth metal foil (3) is provided in an axial direction (10) only in first sections,
**characterized in that**
- the other structured foil (4) includes pass through openings (5) whose cut surfaces (6a, b) that are oriented towards one another are offset relative to one another transversal to a main plane of the foil,
- the pass through openings (5) are in sections (7) in which no metal foil is provided that is provided smooth in the first sections,
- the pass through openings (5) are elements of a secondary structure (8) which is provided at the continuously structured foil (4),
- a secondary structure (8) includes fold overs of wave peaks (12) in an inward direction,
- the fold overs (9) are arranged in the sections (7) remote from the metal foil (3) that is arranged in the first sections.

2. The matrix according to claim 1,
**characterized in that**
the fold overs (9) include pass though openings (5) of the structured metal foil (4) at least at one end, better at a beginning and at an end.

3. The matrix according to one of the preceding claims,
**characterized in that**
the entire fold overs (9) are arranged in the sections (7) remote from the metal foil provided in the first sections (3).

4. The matrix according to one of the preceding claims,
**characterized in that**
the matrix (1) is made from spiral wound smooth metal foil (3) and structured, in particular wave shaped metal foil (4), and/or the smooth metal foil (3) is made from one or plural strips (13) offset in the axial direction (10) and is wound between the layer made from the structured, in particular wave shaped metal fail (4).

5. The matrix according to one of the preceding claims,
**characterized in that**
the strips (13) are attached with their ends inside the spiral at the other metal foil, in particular welded together or soldered together.

6. The matrix according to one of the preceding claims, **characterized in that** the fold overs (9) are always introduced from the same side (14a) into the structured, in particular wave shaped metal foil (4).

7. The matrix according to one of the preceding claims, **characterized in that** the fold overs (9) are introduced in the axial direction (10) or in a transversal direction (11) in an alternating manner from different sides (14a, b) into the structured, in particular wave shaped metal foil (4).

8. The matrix according to one of the preceding claims, **characterized in that** a thickness of the metal foil (3) provided in the first sections is 5% to 20% greater than a thickness of the other metal foil (4).

9. The matrix according to one of the preceding claims,
**characterized in that**
the fold overs (9) have a height (15) of 30% to 100%, in particular 50% to 80% of a height (16) of the wave shaped metal foil (4).

10. The matrix according to one of the preceding claims,
**characterized in that**
a width (17) of the strips (13) is between 0.3 times and 0.8 times, advantageously between 0.4 times and 0.6 times of distances (18) in the axial direction (10) between the strips (13).

11. The matrix according to one of the preceding claims,
**characterized in that**
a width (17) of the strips (13) corresponds to between 3 times and 10 times, in particular between 3 times and 4 times a height (16) of the wave shaped metal foil (4) in the finished matrix (1), in particular in its outer portions.

12. The matrix according to one of the preceding claims,
**characterized in that**
a thickness of the wave shaped metal foil is between 30 and 70 µm, in particular between 45 and 60 µm, in particular 45 and 55 µm and the metal foil is made in particular from stainless steel.

13. A method for producing the matrix according to one of the claims 1 - 12,
**characterized in that**
the strips (13) are laterally supported when winding the matrix (1).

## Revendications

1. Matrice (1) pourvue d'une pluralité de canaux librement traversables (2) destinés aux gaz d'échappement de moteurs à combustion interne, constitués de plusieurs couches de feuille métallique, dont
- au moins une feuille métallique est une feuille métallique lisse (3),
- au moins une feuille métallique texturée (4), en particulier texturée de manière ininterrompue, présente une structure principale en forme d'ondes,
- la feuille métallique (3) n'est présente dans la direction axiale (10) que par sections,
**caractérisée en ce que** :
- l'autre feuille texturée (4) présente des découpes (5) dont les surfaces de coupe opposées (6a,b) sont décalées l'une de l'autre transversalement au plan principal de la feuille,
- les découpes (5) se situent dans les sections (7) dans lesquelles il n'y a pas de feuille métallique lisse par sections,
- les découpes (5) font partie d'une structure secondaire (8) qui est présente sur la feuille texturée ininterrompue (4),
- la structure secondaire (8) comprend des retournements (9) des crêtes d'ondes (12) vers l'intérieur et
- les retournements (9) sont ménagés dans les sections (7) à l'écart de la feuille métallique (3) aménagée par sections.

2. Matrice selon la revendication 1,
**caractérisée en ce que** :
les retournements (9) présentent des découpes (5) de la feuille métallique texturée (4) au moins à une extrémité, mieux encore au départ et à la fin.

3. Matrice selon l'une quelconque des revendications précédentes, **caractérisée en ce que** :
tous les retournements (9) sont ménagés dans les sections (7) à l'écart de la feuille métallique (3) aménagée par sections.

4. Matrice selon l'une quelconque des revendications précédentes, **caractérisée en ce que** :
la matrice (1) est constituée d'une feuille métallique lisse (3) et d'une feuille métallique texturée (4), en particulier ondulée, enroulées en spirale, et/ou la feuille métallique lisse (3) est enroulée sous la forme d'une ou plusieurs bandes (13) espacées dans la direction axiale (10) entre les couches de feuille métallique (4) texturée, en particulier ondulée.

5. Matrice selon l'une quelconque des revendications précédentes, **caractérisée en ce que** :
les bandes (13) sont fixées, en particulier soudées ou brasées, à l'autre feuille métallique par leur extrémité interne spiralée.

6. Matrice selon l'une quelconque des revendications précédentes, **caractérisée en ce que** :
les retournements (9) sont toujours introduits par le même côté (14a) dans la feuille métallique (4) texturée, en particulier ondulée.

7. Matrice selon l'une quelconque des revendications précédentes, **caractérisée en ce que** :
les retournements (9) sont introduits dans la direction axiale (10) ou dans la direction transversale (11) à tour de rôle de côtés différents (14a,b) dans la feuille métallique (4) texturée, en particulier ondulée.

8. Matrice selon l'une quelconque des revendications précédentes, **caractérisée en ce que** :
l'épaisseur de la feuille métallique (3) aménagée par sections est de 5 % à 20 % supérieure à celle de l'autre feuille métallique (4).

9. Matrice selon l'une quelconque des revendications précédentes, **caractérisée en ce que** :
les retournements (9) atteignent une hauteur (15) de 30 % à 100 %, en particulier de 50 % à 80 % de la hauteur (16) de la feuille métallique ondulée (4).

10. Matrice selon l'une quelconque des revendications précédentes, **caractérisée en ce que** :
la largeur (17) des bandes (13) atteint entre 0,3 fois et 0,8 fois, de préférence entre 0,4 fois et 0,6 fois celle des espacements (18) dans la direction axiale (10) entre les bandes (13).

11. Matrice selon l'une quelconque des revendications précédentes, **caractérisée en ce que** :
la largeur (17) des bandes (13) correspond à 3 fois à 10 fois, en particulier à 3 fois à 4 fois la hauteur (16) de la feuille métallique ondulée (4) dans la matrice finie (1), en particulier dans leur zones externes.

12. Matrice selon l'une quelconque des revendications précédentes, **caractérisée en ce que** :
l'épaisseur de la feuille métallique ondulée atteint entre 30 et 70 µm, en particulier entre 40 et 60 µm, tout particulièrement entre 45 et 55 µm et la feuille métallique est constituée en particulier d'acier fin.

13. Procédé de fabrication d'une matrice selon l'une quelconque des revendications 1 à 12,
**caractérisé en ce que** :
les bandes (13) sont guidées latéralement lors de l'enroulement de la matrice (1).
